# FASCICULE DE BREVET EUROPEEN

(11) **EP 0 611 233 B1**
(45) Date de publication et mention de la délivrance du brevet: **23.04.1997**
(21) Numéro de dépôt: 94420041.9
(22) Date de dépôt: 09.02.1994
(51) Int. Cl.: B23Q 1/25, B44B 3/06

(54) **Dispositif de marquage pour la réalisation de signes d'identification à deux dimensions sur la surface d'un objet quelconque**
Gerät für Markierungen zum Aufbringen von Identifikationszeichen nach zwei Dimensionen auf der Oberfläche eines Gegenständes
Device for marking in order to get identification signs according two dimensions on the surface of an object

(30) Priorité: 10.02.1993 FR 9301699
(43) Date de publication de la demande: 17.08.1994
(73) Titulaire: TECHNIFOR Société Anonyme, 01700 Miribel (FR)
(72) Inventeur: Therond, Marcel, F-01701 Miribel Cédex (FR)
(74) Mandataire: Monnier, Guy

(56) Documents cités:
- EP-A- 0 519 850
- DE-A- 2 014 105
- GB-A- 2 021 721

## Description

La présente invention a trait aux dispositifs de marquage utilisés pour la réalisation, sur la surface d'un objet quelconque maintenu immobile, de chiffres, lettres ou autres signes d'identification à deux dimensions.

L'invention vise les dispositifs du type de ceux décrits dans la Demande de brevet EP-A-O 519 850 (TECHNIFOR). On rappellera que dans ces dispositifs, l'outil de marquage, du genre à micro-percussion, est monté axialement à l'extrémité d'une tige orientable dont l'extrémité opposée pénètre à l'intérieur d'un carter fixe à travers une liaison articulée susceptible d'être formée aussi bien par un joint à la Cardan que par une simple rotule.

Pour la commande de l'orientation de la tige porte-outil, le carter renferme un mécanisme d'actionnement qui comprend deux vérins télescopiques orientés parallèlement l'un à l'autre pour agir sur deux bras fixés radialement sur la tige et disposés perpendiculairement l'un à l'autre. L'un des deux éléments de chaque vérin est attelé par une rotule au carter, tandis que l'autre élément est relié, lui-même par une rotule, à l'extrémité du bras radial qui lui correspond.

Dans l'une des formes de réalisation décrites dans le document antérieur précité, les deux vérins d'actionnement sont orientés parallèlement à l'axe de symétrie de la tige orientable en étant attellés à la paroi du carter opposée à celle qui porte la liaison articulée. On conçoit que si cette tige est retenue angulairement à l'encontre de toute rotation suivant son axe, un tel mécanisme d'actionnement assure dans d'excellentes conditions la commande du déplacement de l'outil.

Il convient toutefois de relever qu'un tel agencement comporte encore un inconvénient sensible, dû au fait que par suite de la géométrie de l'ensemble, toute commande exercée par l'un des deux vérins implique nécessairement une action correctrice appliquée à l'autre vérin, et ce même dans le cas où le dispositif est utilisé pour le marquage de tracés rectilignes. Cette correction permanente complique l'appareillage électronique utilisé pour la commande du mécanisme d'actionnement et c'est à cet inconvénient, non négligeable en pratique, que la présente invention entend remédier.

Le dispositif de marquage suivant l'invention est défini à la revendication 1.

En fait l'invention consiste essentiellement à disposer dans le plan transversal à la tige orientable qui intersecte le centre de la liaison articulée (Cardan ou rotule), les deux rotules qui assurent l'attelage des vérins télescopiques au carter.

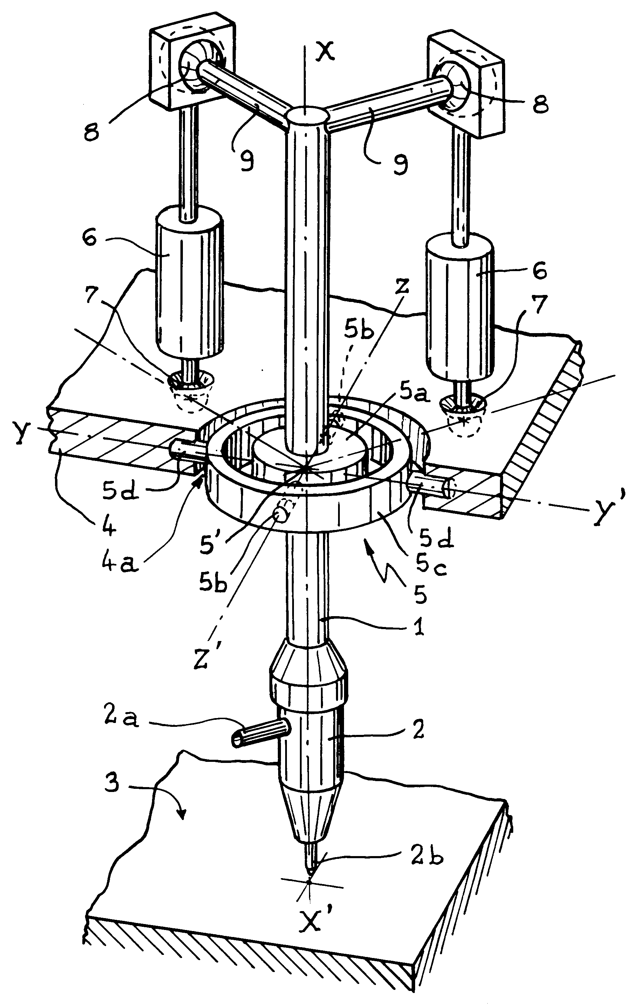

Le dessin annexé, donné à titre d'exemple, permettra de mieux comprendre l'invention, les caractéristiques qu'elle présente et les avantages qu'elle est susceptible de procurer :

La figure unique de ce dessin montre schématiquement en perspective l'agencement du mécanisme d'actionnement d'un dispositif de marquage suivant l'invention.

Sur ce dessin la référence 1 désigne la tige orientable qui porte suivant son axe l'outil à micro-percussion 2, lequel est alimenté pneumatiquement par une canalisation 2a de façon à ce que sa pointe mobile 2b assure le marquage de la surface 3 de l'objet à identifier. La tige 1 pénètre à l'intérieur d'un carter fixe 4 à travers une ouverture 4a dans laquelle est montée la liaison articulée 5 qui supporte ladite tige 1 tout en lui permettant de s'orienter librement en tous sens par rapport à son axe de symétrie X-X' .

Dans l'exemple de réalisation considéré, la liaison articulée 5 est constituée par un joint à la Cardan qui comprend un anneau intérieur 5a rigidement solidaire de la tige 1 et relié par deux tourillons opposés 5b à un anneau extérieur 5c, lui-même réuni au carter 4 par deux tourillons 5d orientés suivant un axe Y-Y' perpendiculaire à celui Z-Z' des tourillons 5b. On peut en variante avoir recours à une rotule, pour autant que cette dernière soit agencée pour retenir angulairement la tige 1 à l'encontre de toute rotation suivant son axe, comme cela est indiqué dans le document antérieur mentionné au début des présentes.

Le mécanisme d'actionnement qui assure la commande de l'orientation de la tige 1 comprend, de la même manière que décrit dans le document antérieur, deux vérins télescopiques 6 qui sont orientés parallèlement à l'axe X-X' et qui sont attelés par des rotules 7, respectivement 8, d'une part au carter 4, d'autre part à l'extrémité libre de deux bras perpendiculaires 9 fixés radialement à la tige 1.

Conformément à la présente invention, les bras 9 sont disposés à une distance telle de l'ouverture 4a du carter 4 que les vérins 6 peuvent trouver place entre lesdits bras 9 et la paroi du carter qui porte la liaison articulée 5. Dans ces conditions les deux rotules 7 peuvent de ce fait se trouver disposées dans le plan transversal à la tige 1 qui passe par le centre 5' de la liaison articulée 5, lequel centre 5' correspond évidemment au point d'intersection des axes Y-Y' et Z-Z' précités.

En conséquence, par suite de la géométrie ainsi définie, la réalisation d'un tracé de marquage rectiligne sur la surface 3 nécessite l'actionnement d'un seul vérin 6, sans aucune action correctrice à apporter au niveau de L'autre vérin. Cet agencement simplifie évidemment la programmation électronique qui assure l'actionnement automatique des deux vérins du mécanisme.

Il convient d'observer que l'orientation des bras 9 par rapport aux axes Y-Y' et Z-Z' peut être quelconque, pour autant que ces deux bras définissent un angle droit et que le centre des rotules 7 soit exactement disposé dans le plan transversal qui correspond au centre 5' de la liaison articulée 5.

## Revendications

1. Dispositif de marquage pour la réalisation de signes d'identification à deux dimensions sur la surface (3) d'un objet quelconque, du genre dans lequel l'outil à micro-percussion (2) est porté axialement par une tige orientable (1) qui est retenue angulairement suivant son axe et qui pénètre dans un carter fixe (4) à travers une liaison articulée (5) autorisant sa libre orientation en tous sens par rapport à un axe de symétrie (X-X'), la commande de l'orientation de cette tige étant opérée à l'aide de deux vérins télescopiques (6) qui sont orientés essentiellement parallèlement à l'axe de la tige (1) et dont une extrémité est attelée par une rotule (8) à l'un ou l'autre des deux bras (9) perpendiculaires entre eux, solidaires radialement de la tige et disposés dans un plan transversal à l'axe de la tige (1) tandis que l'extrémité opposée est elle-même fixée par des rotules (7) au carter (4), caractérisé en ce que les rotules (7) assurant l'attelage des vérins télescopiques au carter sont disposées dans le plan transversal à l'axe de symétrie (X-X') qui passe par le centre (5') de la liaison articulée (5).

## Claims

1. Marking device for making two-dimensional identification signs on the surface (3) of any article, of the type in which the micro-percussion tool (2) is carried axially by an orientatable spindle (1), which is angularly retained according to its axis and which penetrates into a fixed housing (4) through an articulated connection (5) permitting its free orientation in all directions relative to an axis of symmetry (X-X'), control of the orientation of this spindle being operated by means of two telescopic jacks (6), which are orientated substantially parallel to the axis of the spindle (1) and one end of which is attached by a ball-and-socket joint (8) to one or other of the two arms (9), which are perpendicular to each other, radially integral with the spindle and disposed in a transverse plane to the axis of the spindle (1), while the opposite end is attached, in turn, to the housing (4) by ball-and-socket joints (7), characterised in that the ball-and-socket joints (7), ensuring the attachment of the telescopic jacks to the housing, are disposed in the transverse plane to the axis of symmetry (X-X') which passes through the centre (5') of the articulated connection (5).

## Patentansprüche

1. Markierungsgerät zum Aufbringen von Kennzeichen in zwei Dimensionen auf die Oberfläche (3) irgendeines Gegenstandes, bei welchem Gerät das Mikroschlagwerkzeug (2) axial mittels eines verstellbaren Schaftes (1) gehalten ist, welcher längs seiner Achse in einem Winkel gehalten ist und welcher in ein feststehendes Gehäuse (4) quer durch eine Gelenkverbindung (5) eindringt, welche dessen freie Orientierung in jeder Richtung in bezug auf eine Symmetrieachse (X-X') gestattet, wobei die Lageregelung dieses Schaftes mittels zweier Teleskopzylinder (6) betrieben wird, die im wesentlichen parallel zur Achse des Schaftes (1) ausgerichtet sind und deren eines Ende mittels eines Kugelgelenks (8) an dem einen oder dem anderen zweier Arme (9) angekuppelt ist, welche senkrecht zwischen diesen stehen, in radialer Richtung einstückig mit dem Schaft verbunden und in einer Querebene zur Achse des Schaftes (1) angeordnet sind, wohingegen das gegenüberliegende Ende selbst durch Kugelgelenke (7) am Gehäuse (4) befestigt ist, **dadurch gekennzeichnet, daß** die Kugelgelenke (7), welche das Ankuppeln der Teleskopzylinder am Gehäuse sicherstellen, in der Querebene zur Symmetrieachse (X-X') angeordnet sind, welche durch die Mitte (5') der Gelenkverbindung (5) hindurchgeht.
